# EUROPEAN PATENT SPECIFICATION

(11) **EP 2 436 843 B1**
(45) Date of publication and mention of the grant of the patent: **08.03.2017**
(21) Application number: 10780724.0
(22) Date of filing: 10.05.2010
(51) Int. Cl.: E02B 3/18, C02F 1/00, C02F 103/00

(54) **METHOD FOR FORMING RECLAIMED LAND WITHIN SEAWALL AND CONSTRUCTION EQUIPMENT THEREOF**
VERFAHREN ZUR FORMUNG VON ZURÜCKGEWONNENEM LAND MIT EINEM DAMM UND BAUAUSRÜSTUNG DAFÜR
PROCÉDÉ POUR FORMER DES TERRAINS GAGNÉS SUR LA MER DANS UN OUVRAGE LONGITUDINAL ET ÉQUIPEMENT DE CONSTRUCTION ASSOCIÉ

(30) Priority: 26.05.2009 KR 20090045909; 11.08.2009 KR 20090073868
(43) Date of publication of application: 04.04.2012
(73) Proprietor: O, Kwang Sik, Jeonbuk 573-778 (KR)
(72) Inventor: LEE, Kwang Joon, Jeonju City Jeonbuk 560-887 (KR)
(74) Representative: Hirsch & Associés
(86) International application number: PCT/KR2010/002957
(87) International publication number: WO 2010/137813

(56) References cited:
- JP-A- 6 306 835
- JP-A- 8 184 022
- JP-A- S6 153 921
- JP-A- 2005 083 030
- KR-B1- 100 366 609
- NL-A- 7 515 208

## Description

### BACKGROUND OF THE INVENTION

### Field of the Invention

The present invention relates to a method of preparing a reclaimed land within a seawall and a facility structure using the same, and more particularly, to a method of preparing a reclaimed land in which the reclaimed land is prepared by performing banking for dredged soil within a planned reclaimed land, thereby reducing costs, solving an environmental problem according to external dredging, utilizing a ground depression, formed within the planned reclaimed land by the dredging, as a variety of industrial facilities, a stream, or a park, and utilizing clean rainwater as water for industrial and agricultural use, and a facility structure using the method.

### Background of the Related Art

As a method of securing industrial sites or agricultural sites, a method of preparing a reclaimed land by placing a seawall in the seashore and converting a tideland and the sea into the earth has been widely known. A representative example is the Saemangeum land reclamation project in Korea.

Inland reclamation within a seawall is commonly performed by banking using soil and stones picked from the soil and stone picking places of a nearby hillock. If soil and stone picking places do not exist nearby or if a banking area, such as Saemangeum land reclamation project, is very large, Inland reclamation is performed by banking using dredged soil dredged from a nearby sea area.

However, if external dredged soil is used in order to reclaim the inland waters of a seawall, it is difficult to supply the dredged soil in due season according to the construction period.

That is, if external dredged soil is used as banking material, there is a problem in that the construction period is inevitably delayed because it is difficult to supply the banking material owing to an environmental problem and mismatch in a construction plan for each construction institution.

Furthermore, if soil dredged from a nearby sea area is used as banking material, there is a problem in that huge equipment, such as apparatuses for the dredging in the sea are and a lot of vehicles for transporting the dredged soil, huge manpower, and costs must be invested.

Meanwhile, in a reclaimed land in which the inland waters of a seawall are reclaimed to a certain area, a freshwater lake formed by the seawall is used as inflow water. Water introduced from the freshwater lake is circulated through the industrial complex of the reclaimed land and then drained. However, the freshwater lake formed by the seawall is not smoothly circulated, the quality of water is difficult to manage, and the quality of water is easily contaminated. Accordingly, lots of environmental problems are generated.
Furthermore, document JP-A-S61 53921 is directed to a method that conveyes soil by a barge, and charges it on the bottom sea in the vicinity of a place intended to be reclaimed.

In particular this document discloses a method of preparing a reclaimed land bounded by a seawall, the method comprising the following steps:
- a temporary soil portion construction step of constructing temporary soil portions by piling up soil or along the perimeter of a specific area within a planned reclaimed land, setting the planned reclaimed land of the specific area;
- a dredger introduction step of introducing a dredger into an excavation portion within the planned reclaimed land;
- a banking step of banking earth and sand within the excavation portion in banking portions at a level higher than an inland altitude of the inland waters of the seawall and toward inside of the temporary soil portions using the dredger, by piling up earth and sand into the banking portions other than the excavation portions from the planed reclaimed land; and
- a dredger discharging step of externally discharging the dredger outside of the planned reclaimed land before completing the banking portions.

### 10 SUMMARY OF THE INVENTION

Accordingly, the present invention has been made in view of the above problems occurring in the prior art, and it is an object of the present invention to provide a method of preparing a reclaimed land within a seawall by performing banking using earth and sand obtained by excavating a certain area within a planned reclaimed land, and facilities using the method. Accordingly, costs can be reduced, an environmental problem comparing with external dredging can be solved, a ground depression formed within the planned reclaimed land by the dredging can be used as a variety of industrial facilities or a stream and a park, and clean rainwater can be used as water for industrial and agricultural use.

According to an aspect of the present invention, there is provided a method of preparing a reclaimed land according to claim 1.
According to another aspect of the present invention, there is provided a reclaimed land facility structure of a seawall according to claim 2.

### BRIEF DESCRIPTION OF THE DRAWINGS

Further objects and advantages of the invention can be more fully understood from the following detailed description taken in conjunction with the accompanying drawings in which:
FIG. 1 is a flowchart of works for respective steps illustrating a method of preparing the reclaimed land of a seawall that is dredged by introducing a dredger into a planned reclaimed land according to the present invention;
FIG. 2 shows an embodiment of works for respective steps illustrating a method of preparing a reclamation land within a seawall in which a dredger cannot be injected into a planned reclaimed land, which is not part of the subject-matter of the invention;
FIG. 3 is a plan view after land reclamation according to the method of preparing the reclaimed land within the seawall according to the present invention;
FIG. 4 is a cross-sectional view taken along line A-A of FIG. 3;
FIG. 5 is a schematic perspective view of a reclaimed land according to the present invention;
FIG. 6 is a plan view of a stream 80 according to the present invention;
FIG. 7 is a cross-sectional view taken along line A-A of FIG. 6;
FIGS. 8, 9, and 10 are cross-sectional views of FIG. 7; and
FIGs. 11 and 12 show a removal portion 160 and a purification portion 170 according to the present invention.

### DETAILED DESCRIPTION OF EMBODIMENTS

Some exemplary embodiments of the present invention will now be described in detail with reference to the accompanying drawings.

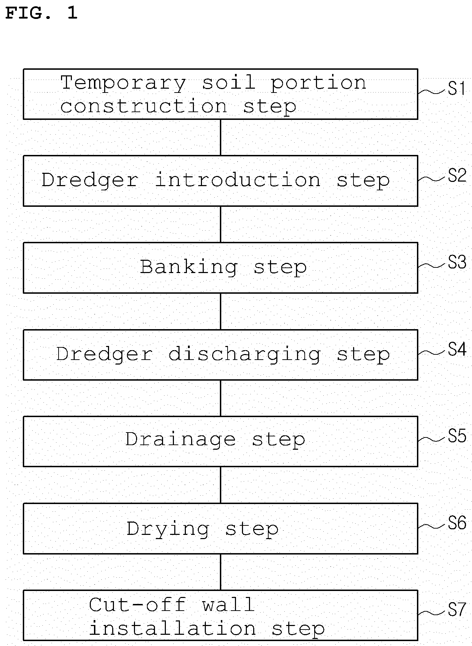

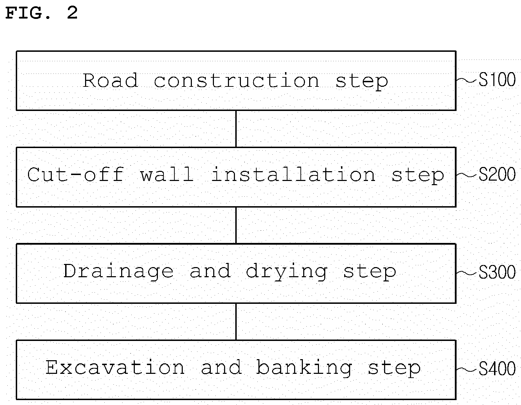

FIG. 1 is a flowchart of works for respective steps illustrating a method of preparing the reclaimed land of a seawall that is dredged by introducing a dredger into a planned reclaimed land according to the present invention, and FIG. 2 shows an embodiment of works for respective steps illustrating a method of preparing a reclamation land within a seawall in which a dredger cannot be injected into a planned reclaimed land, which is not part of the claimed invention.

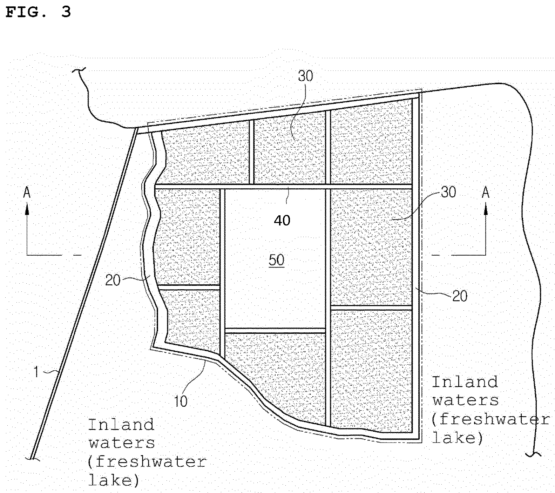

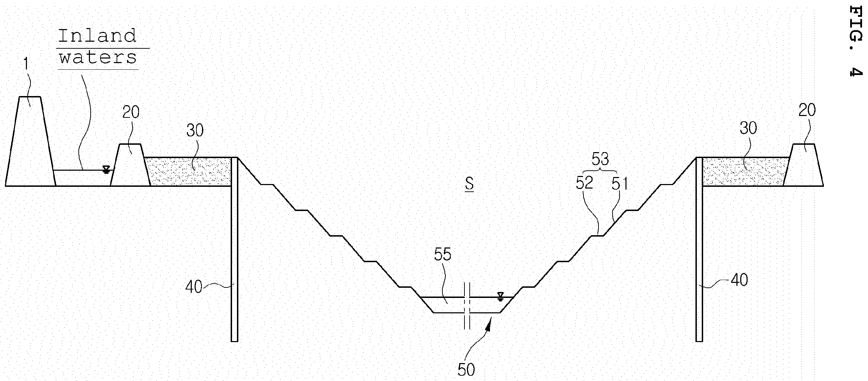

Meanwhile, FIG. 3 is a plan view after land reclamation according to the method of preparing the reclaimed land within the seawall according to the present invention, and FIG. 4 is a cross-sectional view taken along line A-A of FIG. 3.

The method of preparing a reclaimed land within a seawall according to the present invention includes a dredger within a planned reclaimed land.

First, a method of performing a dredging work through a dredger is described.

An area on which a dredging work through a dredger is possible in a planned reclaimed land within a seawall is advantageous in a work using the dredger in terms of costs. Accordingly, the method of performing a dredging work through a dredger includes a temporary soil portion construction step S1, a dredger introduction step S2, a banking portion construction step S3, a dredger discharging step S4, a drainage step S5, a drying step S6, and a cut-off wall installation step S7.

Each of the steps is described in detail.

### A. Temporary soil portion construction step S1

The temporary soil portion construction step S1 is the step of constructing temporary soil portions 20 by piling up soil or stones along the circumference of a certain area within a planned reclamation land 10.

When the inland waters of a seawall 1 are reclaimed, the
entire inland waters are not reclaimed at the same time, but the
planned reclaimed land 10 is partitioned into specific areas according to uses for an industrial complex, a housing complex, and an agricultural development and the partitioned areas are independently reclaimed.

Accordingly, the temporary soil portion construction step S1 includes setting the planned reclaimed land 10 of a specific area, partitioning the inside of the planned reclaimed land 10 into a plurality of areas, and constructing the temporary soil portions 20 along the circumferences of the classified areas.

That is, the temporary soil portions 20 are produced by piling up soil or stones along the circumferences of the plurality of partitioned areas within the planned reclaimed land 10.

One temporary soil portion 20 is constructed on the circumference of one of the plurality of partitioned areas, and the other temporary soil portion 20 is constructed on the circumference of the other of the plurality of partitioned areas. During the time for which the other temporary soil portion 20 is constructed subsequently to the circumference of the other area, a banking work 30 through a dredger (not shown) is performed toward
the inside of the temporary soil portion 20 previously constructed.

Furthermore, the height of the temporary soil portion 20 is higher than the height of the inland
waters of the seawall 1 and the height of a banking portion 30.

Meanwhile, when the temporary soil portions 20 are constructed within the planned reclaimed land 10, there must be a passage (not shown) through which the dredger is introduced.

### B. Dredger introduction step S2

The dredger introduction step S2 is the step of introducing a dredger into the dredging work space S (i.e., an excavation portion 50) of the planned reclaimed land 10.

It is preferred that the excavation portion 50 have a specific area approximately at the center of the planned reclaimed land 10. However, the excavation portion 50 may exist at various places within the planned reclaimed land 10.

Furthermore, the dredger may be introduced before or after the temporary soil portion construction step S1 or during the construction.

### C. Banking step S3

The banking step S3 is the step of banking earth and sand of the excavation portion 50 into the insides of the temporary soil portions 20 using a dredger.

That is, earth and sand, dipped up into the inside of the temporary soil portion 20 constructed on the circumference of a specific area in the temporary soil portion construction step S1 through the dredger, is piled up in the banking portion 30 other than the excavation portion 50. Here, the height of the banking portion 30 is higher than the altitude of the inland waters of the seawall 1.

As described above, the temporary soil portion construction step S1 and the banking step S3 are repeatedly performed. Accordingly, banking is performed on the insides of all the temporary soil portions 20 within the planned reclaimed land 10 by sequentially piling up the insides of the plurality of partitioned temporary soil portions 20.

Accordingly, a ground depression is formed within the excavation portion 50 of the planned reclaimed land 10 that has been generated by dipping up earth and sand and, at the same time, the banking portions 30 higher than the inland waters of the seawall 1 is formed in the remaining portions of the planned reclaimed land 10. Here, the banking work is performed so that there remains a passage through which the dredger used for the dredging work within the excavation portion 50 can exit outside of the planned reclaimed land 10.

Meanwhile, while the banking work is performed toward the inside of the temporary soil portion 20 using earth and sand, water is drained outside the temporary soil portion 20.

### D. Dredger discharging step S4

The dredger discharging step S4 is a work of externally discharging the
dredger outside the planned reclaimed land 10 before the entire banking work for the planned reclaimed land 10 is completed.

After the dredger is externally removed from the planned
reclaimed land 10, the passage remained in order to discharge the dredger is subjected to banking, thereby completing the banking portions 30.

Before the dredger is externally removed from the planned
reclaimed land 10, earth and sand are dipped up from the excavation portion 50 of the planned reclaimed land 10 using the dredger, thereby generating a ground depression. The remaining portions form the banking portions 30 on each of which earth and sand are piled up to a specific height. Water is filled in the bottom of the ground depression formed in the excavation portion 50.

### E. Drainage step S5

The drainage step S5 is a work of externally draining the water of the planned reclaimed land 10 filled in the bottom of the ground depression within the excavation portion 50, after the banking within the planned reclaimed land 10 is completed.

That is, the water filled in the excavation portion 50 is fully drained toward the outside of the planned reclaimed land 10
using a pump.

### F. Drying step S6

The drying step S6 is a process of naturally drying the earth and sand within the planned reclaimed land 10 after the water within the excavation portion 50 is drained toward the inland waters of the planned reclaimed land 10 through the drainage step S5.

Here, not only the earth and sand piled up on the banking portion 30, but also earth and sand within the ground depression 50 formed through the dredging within the excavation portion 50 is fully dried.

### G. Cut-off wall installation step S7

The cut-off wall installation step S7 is a work of pile-hammering a sheet pile 40 in the circumference of the excavation portion 50 or grouting the circumference of the excavation portion 50 in order to prevent water from being introduced into the ground depression formed in the planned reclaimed land 10 after the drying step S6.

Here, it is preferred that the sheet pile 40 be inserted into the underground to a depth of about 25 to 35 m, although it may be changed according to the nature of the soil.

Meanwhile, if a work is difficult to perform because of a rock bed found while the sheet pile 40 is subjected to pile-hammering, a portion of the rock bed from which water leaks is grouted.

If the sheet pile 40 is installed in the circumference of the excavation portion 50 or the circumference of the excavation portion 50 is grouted as described above, the subsidence of ground in the ground depression formed in the excavation portion 50 can be prevented.

Meanwhile, the ground depression within the excavation portion 50 formed through the dredging work has a gentler incline plane 51 as shown in FIG. 4. The incline plane 51 may be formed in a step form, and industrial facilities or a variety of facilities, such as a building, a park, and a solar light power plant, may be built in horizontal planes 52.

Furthermore, if the incline plane 51 of the excavation portion 50 is formed stepwise, problems due to heaving, boiling, piping, sliding, and the introduction of underground water can be prevented.

Furthermore, the bottom surface of the excavation portion 50 can be formed into a water tank 55 in which rainwater can be stored through a grading work. The water of the water tank 55 can be purified through an ecology stream that circulates the water through the reclaimed land.

Accordingly, various facilities, a park, and a solar light power plant can be built in the ground depression of the excavation portion 50 formed through the dredging within the planned reclaimed land 10. Furthermore, a water-friendly ecology space can be created because purified rainwater can be used as water for industrial and agricultural use even though the water of a freshwater lake is not introduced.

Another method, which is not part of the claimed invention, of preparing a reclaimed land when it is difficult to inject a dredger because the depth of inland waters within the planned reclaimed land 10 is small or there are a lot of obstacles, such as stones, in the planned reclaimed land 10 is described below.

As shown in FIG. 2, a reclaimed land is prepared using a temporary soil portion and road construction step S100, a cut-off wall installation step S200, a drainage and drying step S300, and an excavation and banking step S400.

A detailed work is described below if a dredger cannot be injected in the planned reclaimed land 10 as described above.

### A. Road construction step S100

The road construction step S100 is a work of building a road in the planned reclaimed land 10 using earth and sand or concrete in the planned reclaimed land 10.

A road adjoining inland waters within the seawall 1 is formed higher than an inland altitude, thus functioning to prevent the intrusion of inland waters. Meanwhile, a road placed within the planned reclaimed land 10 is constructed according to a pre-planned characteristic for development, such as an industrial complex or a housing complex.

Here, the excavation portion 50 is previously set at the central portion of the planned reclaimed land 10 so that a road can be constructed on the circumference of the excavation portion 50.

### B. Cut-off wall installation step S200

The cut-off wall installation step S7 is performed by pile-hammering the sheet pile 40 in the circumference of the preset excavation portion 50 or grouting the preset excavation portion 50 in order to prevent water from being introduced into the ground depression to be formed through a subsequent work within the planned reclaimed land 10 after the road construction step S100.

Here, it is preferred that the sheet pile 40 be inserted into the underground to a depth of about 25 to 35 m, although it may be changed according to the nature of the soil.

Meanwhile, if a work is difficult to perform because of a rock bed found while the sheet pile 40 is subjected to pile-hammering, a portion of the rock bed from which water leaks is grouted.

If the sheet pile 40 is installed in the circumference of the excavation portion 50 or the circumference of the excavation portion 50 is grouted as described above, the subsidence of ground in the ground depression formed in the excavation portion 50 can be prevented.

### C. Drainage and drying step S300

The drainage and drying step S300 is a process of draining water, existing within the entire planned reclaimed land 10, toward the inland waters of the seawall 1 and drying the entire planned reclaimed land 10 at the same time.

That is, the water existing within the planned reclaimed land 10 is fully drained toward the inland waters of the seawall 1 using a pump, and the planned reclaimed land 10 is naturally dried at the same time.

Since water does not exist in the entire area within the planned reclaimed land 10 through the drainage and drying step S300, the planned reclaimed land 10 is lower as low as the depth of water except the road 20.

### D. Excavation and banking step S400

The excavation and banking step S400 is a work of producing the banking portions 30 by picking earth and sand from the excavation portion 50 in which the sheet pile is installed in the cut-off wall installation step S200.

That is, earth and sand are dipped up from the excavation portion 50 within the planned reclaimed land 10 and then externally moved outside of the excavation portion 50 and then loaded thereon, thereby completing the banking portions 30.

Here, it is preferred that the height of the banking be higher than the height of inland waters of the seawall 1.

After the excavation and banking step S400 is completed, the ground depression is formed because of the earth and sand dipped up on the excavation portion 50. The banking portions 30 become flatlands higher than the inland waters of the seawall 1.

Here, since the sheet pile is installed in the circumference of the excavation portion 50 in the cut-off wall installation step S200, there is no water in the ground depression of the excavation portion 50.

Like in the method of preparing the reclaimed land by injecting the dredger, the ground depression within the excavation portion 50 has the incline plane 51. The incline plane 51 is formed stepwise, so that industrial facilities or various facilities, such as a building, a park, and a solar light power plant, can be built in the horizontal planes 52.

Furthermore, problems due to heaving, boiling, piping, sliding, and the introduction of underground water can be prevented because the incline plane 51 of the excavation portion 50 is formed stepwise.

Furthermore, the bottom surface of the excavation portion 50 becomes the water tank 55 capable of storing rainwater through a grading work, and the water of the water tank 55 is purified through an ecology stream that circulates the water through the reclaimed land.

A facility capable of utilizing purified rainwater as water for industrial and agricultural use using the ground depression of the excavation portion 50 formed according to the method of preparing the reclaimed land within the seawall 1 is described below.

As can be seen from FIG. 3, the reclaimed land formed by the preparing method according to the present invention includes the temporary soil portions or roads 20 installed by piling up soil or stone material along the circumference of the planned reclaimed lands 20 in order to prevent freshwater from being introduced into the planned reclaimed land 10 of the seawall 1, the excavation portion 50 in which the ground depression is formed by dredging a specific area within the planned reclaimed land 10, the banking portions 30 in which the flatlands higher than the inland altitude are formed by reclaiming the planned reclaimed land 10 other than the excavation portion 50 by using earth and sand obtained from the excavation portion 50, and a cut-off portion 40 installed along the circumference of the excavation portion 50.

Meanwhile, the excavation portion 50 includes the incline portion 53 formed stepwise and the water tank 55 formed at the bottom. The incline portion 53 includes the horizontal plane 51 and the incline plane 52.

According to one embodiment of the present invention, freshwater (i.e., inland
waters) is not used as water provided to industrial facilities and apartments installed within the reclaimed land, but purified rainwater is used as water for industrial and agricultural uses.

According to one embodiment of the present invention, in order to purify
rainwater filled in the water tank 55 of the excavation portion 50, the rainwater is purified by forming a stream and a facility for purifying contaminated rainwater (initial rainwater) is additionally installed.

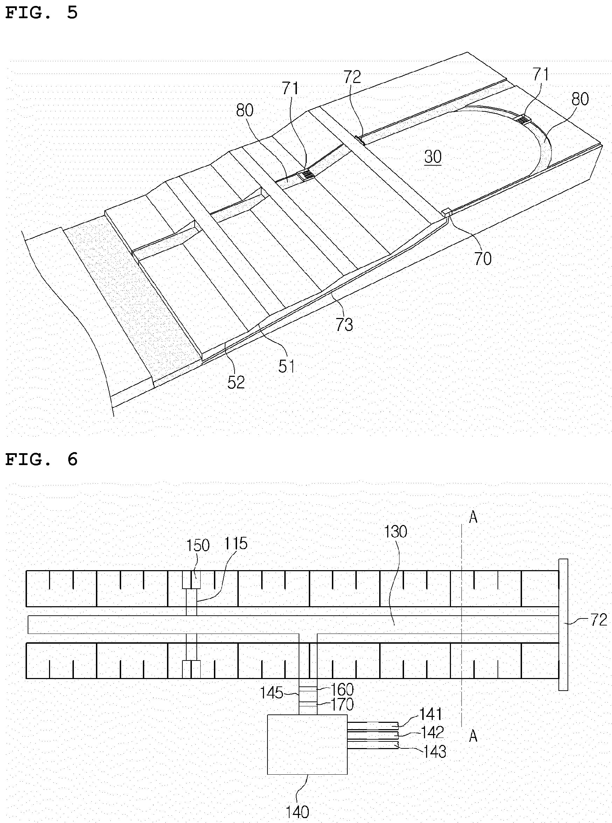

FIG. 5 is a schematic perspective view of the reclaimed land according to the present invention.

In FIG. 5, a construction for circulating water filled in the water tank 55 of the excavation portion 50 is shown.

Water stored in the water tank 55 is supplied to a stream 80 through water supply channel 73 using a lifting machinery 70 installed in the banking portion 30 of the flatland. The stream 80 is formed in the banking portion 30 of the flatland and the incline portion 53 of the excavation portion and then connected to the water tank 55.

Accordingly, when the water lifting machinery 70 is driven, the water of the water tank 55 is circulated in order of the water tank 55 → the water supply channel 73 → the stream 80 of the banking portion 30 → the stream 80 of the incline portion 53 → the water tank 55. Accordingly, the water stored in the water tank 55 is naturally purified.

The water lifting machinery 70 and the stream 80 may be installed or produced according to a characteristic for each development of the reclaimed land.

Meanwhile, a plurality of purification facility portions 71 may be installed in the middles of the stream 80 in order to further circulate purified water.

Furthermore, a water gate 72 is installed at a placed where the banking portion 30 adjoins the incline portion 53 of the excavation portion 50 in order to further improve the quality of water through the natural drop of water.

The clean rainwater stream may be varied according to how initial rainwater is purified.

According to the present invention, means for gathering the initial rainwater is installed in the stream 80.

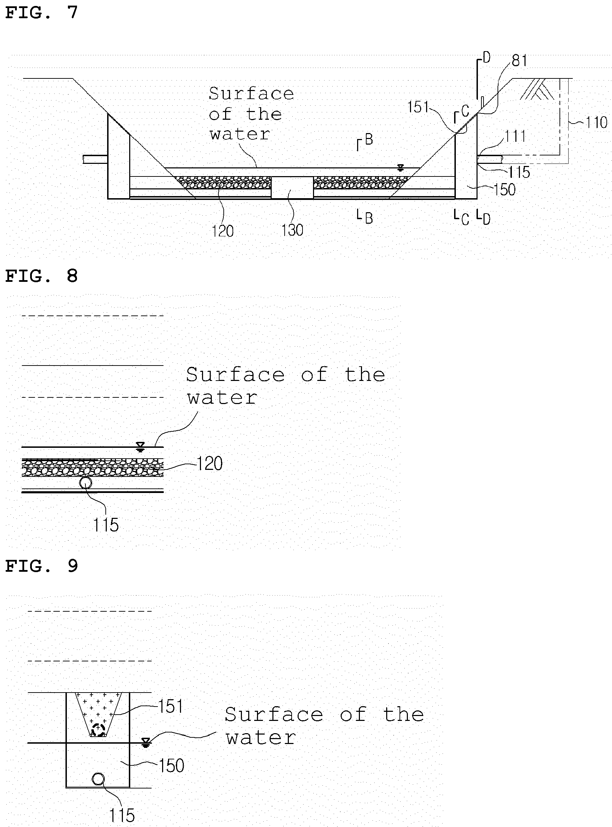

FIG. 6 is a plan view of the stream 80 according to the present invention, FIG. 7 is a cross-sectional view taken along line A-A of FIG. 6, and FIGS. 8, 9, and 10 are cross-sectional views of FIG. 7.

As can be seen from FIGS. 6 and 7, the rainwater gathering means according to one embodiment of the present invention includes a rainwater
pipe 110 into which rainwater on a road is introduced, a catchment pipe 130 for guiding the rainwater passing through the rainwater pipe 110 so that the rainwater can flow in the same direction as water flowing through the stream 80, and an undercurrent tank 140 for temporarily gathering the rainwater passing through the catchment pipe 130.

The catchment pipe 130 has a diameter much greater than that of the rainwater pipe 110.

Furthermore, according to one embodiment of the present invention, if the
amount of rainfall is much after initial contaminated rainwater drops, catchment tanks 150 connected to the upper portion of the rainwater pipe 110 are installed so that rainwater flowing through the rainwater pipe 110 is introduced into the stream 80.

Accordingly, as can be seen from FIG. 7, the rainwater passing through the catchment tanks 150 flows into the catchment pipe 130 via the lower portion of a rainwater pipe 115 installed under a stream bottom portion 120.

As shown in FIGS. 7 and 9, a portion of the catchment tank 150, adjoining the incline plane 81 of the stream 80, is higher than the inflow hole 111 of an upper portion of the rainwater pipe 110 and has a great width. Accordingly, the rainwater passing through the inflow hole 111 of the upper portion of the rainwater pipe 110 is temporarily stored in the catchment tanks 150.

Next, if the amount of the rainwater introduced into the upper portion of the rainwater pipe 110 of the catchment tank 150 is increased to exceed the capacity of the catchment pipe 130, the rainwater flows over to the stream 80 through an overflow portion 151.

Meanwhile, as shown in FIG. 6, a branch pipe 145 connected to the catchment pipe 130 is installed on the ground near the downstream of the stream 80 adjacent to the water tank 55. Accordingly, the rainwater gathered in the catchment pipe 130 is gathered at the undercurrent tank 140 the branch pipe 145 installed outside the stream 80.

Although not shown, if the rainwater gathering means is installed separately from the stream 80, the catchment pipe 130 may be directly connected to the undercurrent tank 140 without additionally installing the branch pipe 145.

The branch pipe 145 is installed at a place different from that of the stream 80.

A removal portion 160 for filtering contaminated water and floating matters and a purification portion 170 for purifying water are installed on the branch pipe 145 installed between the catchment pipe 130 and the undercurrent tank 140 of the present invention.

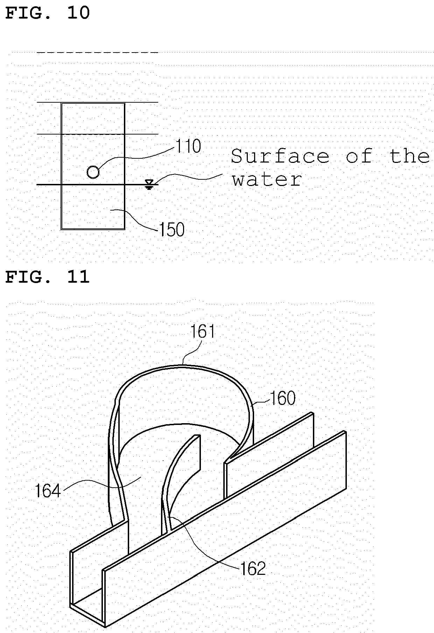

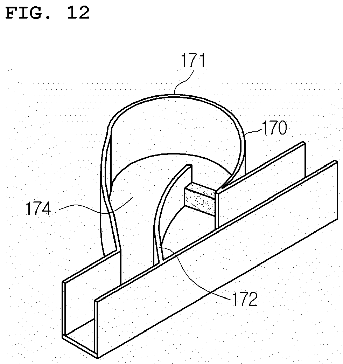

FIGs. 11 and 12 show a removal portion 160 and a purification portion 170 according to one embodiment of the present invention.

The removal portion 160 includes a curve portion 161 configured to make slow the speed of a flow by increasing a part of the branch pipe 145 greater than the cross section of the branch pipe 145, a guidance portion 162 configured to change the direction of the flow, and a precipitation portion 164 formed deeper than the bottom of the branch pipe 145. Accordingly, while rainwater passes through the removal portion 160, floating matters and deposits remain in the removal portion 160.

Furthermore, the purification portion 170 includes an enlarged pipe portion 171 formed by enlarging a part of the branch pipe 145, a guidance portion 172 configured to change the flow of water within the enlarged pipe portion 171, and a purification filter 175 installed at right angles to the direction of water.

As described above, the rainwater filtered through the branch pipe 145 having the precipitation portion 160 and the purification portion 170 reaches the undercurrent tank 140.

The undercurrent tank 140 includes a first pipe line 141 connected to the water purification plant according to the state of the quality of water, a second pipe line 142 connected to a sewage disposal treatment plant, and a third pipe line 143 connected to a drainage line. The present invention shows only an example of a pipe line connected to the undercurrent tank 140 and can connect various facilities according to the state of the quality of water and purify rainwater.

Meanwhile, although not shown, rainwater passing through the facilities of a common sewage disposal treatment plant or water purification plant can flow into the water tank 55 in a clean state.

The means for circulating the water of the ground depression formed in the reclaimed land prepared according to the method of preparing the reclamation method according to the present invention and the means for gathering purified rainwater are only embodiments, and a lot of methods using rainwater may be used.

As described above, according to the present invention, dredged soil within the planned reclaimed land of a seawall is used. Accordingly, costs can be reduced. Furthermore, a variety of industrial facilities or streams are formed in ground depression formed by dredging within the planned reclaimed land and used as a rainwater storage tank. Accordingly, clean water for industrial and agricultural use can be supplied to prepared developments.

Furthermore, ecology spaces can be prepared within the reclaimed land through streams for circulating rainwater. Accordingly, eco-friendly developments can be formed.

As described above, according to the present invention, banking is performed using dredged soil picked from an excavation portion within a planned reclaimed land. Accordingly, the construction period and costs can be reduced, and an environmental problem according to external dredging can be solved.

Furthermore, the water tank capable of storing rainwater purified in the ground depression produced through dredging in the excavation portion is used, and the rainwater is used as water for industrial and agricultural uses. Furthermore, ecology spaces can be formed by circulating water, stored in the water tank, through the reclaimed land.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention, as defined by the appended claims.

## Claims

1. A method of preparing a reclaimed land bounded by a seawall (1), the method comprising the following steps:
a temporary soil portion construction step (S1) of constructing temporary soil portions (20) by piling up soil or stones along the perimeter of a specific area within a planned reclaimed land (10), setting the planned reclaimed land (10) of the specific area, partitioning the inside of the planned reclaimed land (10) into a plurality of areas and constructing the temporary soil portions (20) along the perimeter of the specific areas;
a dredger introduction step (S2) of introducing a dredger into an excavation portion (50) within the planned reclaimed land (10);
a banking step (S3) of banking earth and sand within the excavation portion (50) in banking portions (30) at a level higher than an inland altitude of the inland waters of the seawall (1) and toward insides of the temporary soil portions (20) using the dredger, by piling up earth and sand into banking portions (30) other than the excavation portions (50) from the planed reclaimed land (10), so that a ground depression is formed within the excavation portion (50) of the planned reclaimed land (10) that has been generated by dipping up earth and sand and, at the same time, by forming the banking portions (30) higher than the inland waters of the seawall (1) in the remaining portions of the planned reclaimed land (10);
a dredger discharging step (S4) of externally discharging the dredger outside of the planned reclaimed land (10) before completing the banking portions (30);
a drainage step (S5) of externally draining water within the excavation portion (50) outside of the planned reclaimed land (10) after completing the banking portions (30) within the planned reclaimed land (10);
a drying step (S6) of drying the earth and sand within the planned reclaimed land (10); and
an installing step (s7) of installing a cut-off wall (40) in a circumference of the excavation
portion (50) so that the circumference of the excavation portion (50) formed through the dredging in the excavation portion (50) can be cut off after the drying step (S6) in order to prevent water from being introduced into the ground depression formed in the planned reclaimed land (10).

2. A reclaimed land facility structure of a seawall (1) obtained with the method of claim 1, comprising:
temporary soil portions (20) installed by piling up soil or stone material along a circumference of a specific area within planned reclaimed land (10), by setting the planned reclaimed land (10) of the specific area, by partitioning the inside of the planned reclaimed land (10) into a plurality of areas and by constructing the temporary soil portions (20) in the respective areas and configured to prevent inland waters from being introduced into the planned reclaimed land (10) of the seawall (1);
an excavation portion (50) configured to have a ground depression formed therein by dredging the specific area within the planned reclaimed land (10);
banking portions (30) configured to form flatlands higher than an inland altitude by reclaiming the planned reclaimed land (10) other than the excavation portion (50) by using earth and sand obtained from the excavation portion (50); and
a cut-off wall (40) installed along a circumference of the excavation portion (50).

3. The reclaimed land facility structure as claimed in claim 2, wherein the excavation portion (50) comprises:
an incline portion (53) formed stepwise, and
a water tank (55) formed in a bottom of the excavation portion (50).

4. The reclaimed land facility structure as claimed in claim 3, further comprising a stream (80) formed along the banking portion (30) having the flatland formed therein and incline planes (51) of the excavation portion (50), wherein water stored in the water tank (55) is circulated using a water lifting machinery (70) installed in the banking portion (30).

5. The reclaimed land facility structure as claimed in claim 4, further comprising a plurality of purification facility portions (71) installed in the stream (80) and a water gate (72) installed at a portion adjoining the incline planes (51) of the excavation portion (50) of the stream (80).

6. The reclaimed land facility structure as claimed in claim 4, further comprising rainwater gathering means (100) installed in the stream (80).

7. The reclaimed land facility structure as claimed in claim 6, wherein the rainwater gathering means (100) comprises:
rainwater pipes (110, 115) configured to have rainwater on a ground introduced therein;
a catchment pipe (130) installed in a stream bottom portion (120) and configured to guide rainwater, passing through the rainwater pipes (110, 115), so that the rainwater flows in a direction identical with a direction along which water flows through the stream (80); and
an undercurrent tank (140) configured to have the rainwater, passing through the catchment pipe (130), temporally gathered therein.

8. The reclaimed land facility structure as claimed in claim 7, further comprising catchment tanks (150) connected to the rainwater pipe (110) at a portion adjoining the stream bottom portion (120) and configured to have the rainwater introduced into the stream (80) when the rainwater is increased.

9. The reclaimed land facility structure as claimed in claim 7, further comprising a branch pipe (145) connected to the catchment pipe (130) neat a lower reach of the stream (80) adjacent to the water tank (55) and configured to have the rainwater, gathered at the catchment pipe (130), gathered at the undercurrent tank (140) through the branch pipe (145).

10. The reclaimed land facility structure as claimed in claim 7 or 9, wherein the undercurrent tank (140) comprises:
a first pipe line (141) connected to a water purification plant according to a state of a quality of water;
a second pipe line (142) connected to a sewage disposal treatment plant; and
a third pipe line (143) connected to a drainage path.

11. The reclaimed land facility structure as claimed in claim 9, wherein:
the branch pipe (145) is installed on a ground separately from the stream (80), and
the branch pipe (145) comprises a removal portion (160) and a purification portion (170) for removing floating matters and deposits while the rainwater flows through the branch pipe (145).

12. The reclaimed land facility structure as claimed in claim 11, wherein the removal portion (160) comprises:
a curve portion (161) formed to have a larger cross section than the branch pipe (145) and configured to make slow a speed of a flow;
a guidance portion (162) configured to change the direction of the flow; and
a precipitation portion (164) formed deeper than a bottom of the branch pipe (145),
wherein while the rainwater passes through the removal portion (160), floating matters and deposits remain in the removal portion (160).

13. The reclaimed land facility structure as claimed in claim 11, wherein the purification portion (170) comprises:
an enlarged pipe portion (171) formed by enlarging a part of the branch pipe (145),
a guidance portion (172) configured to change a direction of the flow, and
a purification filter (175) installed within the enlarged pipe portion (171).

## Patentansprüche

1. Verfahren zur Herstellung von zurückgewonnenem Land, das durch einen Damm (1) begrenzt wird, wobei das Verfahren die folgenden Schritte aufweist:
einen temporären Bodenbereichs-Bauschritt (S1) für das Bauen von temporären Bodenbereichen (20), durch Aufhäufen von Boden oder Steinen entlang des Umfangs eines bestimmten Gebiets innerhalb von geplantem zurückgewonnenen Land (10), Festlegung des geplanten zurückgewonnenen Lands (10) des bestimmten Gebiets, Aufteilung des Inneren des geplanten zurückgewonnenen Lands (10) in mehrere Gebiete, und Bauen der temporären Bodenbereiche (20) entlang des Umfangs der bestimmten Gebiete;
einen Bagger-Einsetzungsschritt (S2) für die Einsetztung eines Baggers in einen Aushubbereich (50) innerhalb des geplanten zurückgewonnenen Lands (10) ;
einen Aufdämmungsschritt (S3) für das Aufdämmen von Erde und Sand innerhalb des Aushubbereichs (50) in Aufdämmungsbereiche (30) bei einem Niveau das höher ist als jenes einer Binnenhöhe der Binnengewässer des Damms (1) und zu den Innenseiten der temporären Bodenbereiche (20) unter Verwendung des Baggers durch Aufhäufen von Erde und Sand in andere Aufdämmungsbereiche (30) als die der Aushubbereiche (50) von dem geplanten zurückgewonnenen Land (10), so dass sich eine Bodenvertiefung innerhalb des Aushubbereichs (50) des geplanten zurückgewonnenen Lands (10) formt, das durch das Abschöpfen von Erde und Sand erzeugt wurde, und gleichzeitig durch das Formen der Aufdämmungsbereiche (30), die höher sind als die Binnengewässer des Damms (1) in den verbleibenden Bereichen des geplanten zurückgewonnenen Lands (10);
einen Baggerabladeschritt (S4) für das externe Abladen des Baggers außerhalb des geplanten zurückgewonnenen Lands (10) vor der Beendung der Aufdämmungsbereiche (30);
einen Entwässerungsschritt (S5) des nach außen abgeführten Wassers innerhalb des Aushubbereichs (50), außerhalb des geplanten zurückgewonnenen Lands (10) nach Beendung der Aufdämmungsbereiche (30) innerhalb des geplanten zurückgewonnenen Lands (10);
einen Trocknungsschritt (S6) zum Trocknen der Erde und des Sandes innerhalb des geplanten zurückgewonnenen Lands (10); und
einen Installationsschritt (s7) zum Installieren einer Abschneide-Wand (40) in einem Umfang des Aushubbereichs (50), so dass der Umfang des, durch das Ausbaggern in dem Aushubbereich (50), geformten Aushubbereichs (50) nach dem Trocknungsschritt (S6) abgeschnitten werden kann, um zu verhindern, dass Wasser in die, in dem geplanten zurückgewonnenen Land geformte Bodenvertiefung eingeführt wird.

2. Einrichtungsstruktur für zurückgewonnenes Land eines Damms (1), der durch das Verfahren nach Anspruch 1 erhalten wurde, welche folgendes aufweist:
temporäre Bodenbereiche (20), installiert durch Aufhäufen von Boden- oder Steinmaterial entlang eines Umfangs eines bestimmten Gebiets innerhalb von geplanten zurückgewonnen Land (10), durch Festlegen des geplanten zurückgewonnenen Lands (10) des bestimmten Gebiets, durch Aufteilen des Inneren des geplanten zurückgewonnenen Lands (10) in mehrere Gebiete, und durch das Bauen der temporären Bodenbereiche (20) in den entsprechenden Gebieten, und dazu gestaltet, um zu verhindern, dass Binnengewässer in das geplante zurückgewonnene Land (10) des Damms (1) eingebracht werden;
einen Aushubbereich (50), der dazu gestaltet ist, eine Bodenvertiefung zu haben, die durch Ausbaggern des bestimmten Gebiets innerhalb des geplanten zurückgewonnenen Lands (10) darin geformt ist;
Aufdämmungsbereiche (30), die dazu gestaltet sind, Flachland höher als eine Binnenhöhe zu formen, indem das geplante wiedergewonnene Land (10), außer dem Aushubabschnitt (50), durch Verwendung von Erde und Sand die von dem Aushubabschnitt (50) erhalten wurden, zurückgewonnen wird; und
eine Abschneide-Wand (40), die entlang eines Umfangs des Aushubbereichs (50) installiert ist.

3. Einrichtungsstruktur für zurückgewonnenes Land nach Anspruch 2, wobei der Aushubbereich (50) folgendes aufweist:
einen geneigten Bereich (53), der stufenweise geformt ist; und
einen Wassertank (55), der in einem Grund des Aushubbereichs (50) geformt ist.

4. Die Einrichtungsstruktur für zurückgewonnenes Land nach Anspruch 3, ferner aufweisend einen Strom (80), der sich entlang des Aufdämmungsbereichs (30) gebildet hatte, wobei er das Flachland darin geformt hat, und geneigte Ebenen (51) des Aushubbereichs (50), wobei das in dem Wassertank (55) gespeicherte Wasser unter Verwendung einer in dem Aufdämmungsbereich (30) installierten Hebevorrichtung (70) umgewälzt wird.

5. Die Einrichtungsstruktur für zurückgewonnenes Land nach Anspruch 4, ferner aufweisend mehrere Reinigungseinrichtungsbereiche (71), die in dem Strom (80) installiert sind, und ein Wassertor (72), das in einem Bereich installiert ist, der an die geneigten Ebenen (51) des Aushubbereichs (50) des Stroms (80) angrenzt.

6. Die Einrichtungsstruktur für zurückgewonnenes Land nach Anspruch 4, ferner aufweisend Regenwassersammelmittel (100), die in dem Strom (80) installiert sind.

7. Die Einrichtungsstruktur für zurückgewonnenes Land nach Anspruch 6, wobei die Regenwassersammelmittel (100) folgendes aufweisen:
Regenwasserrohre (110, 115), die dazu gestaltet sind, dass auf einem Grund liegendes Regenwasser darin eingeführt wird;
ein Auffangrohr (130), das in einem Strombodenabschnitt (120) installiert ist und dazu gestaltet ist, Regenwasser zu leiten, das durch die Regenwasserrohre (110, 115) läuft, so dass das Regenwasser in eine Richtung fließt, die identisch zu einer Richtung ist, entlang welcher Wasser durch den Strom (80) fließt; und
einen Unterstromtank (140), der dazu gestaltet ist, das Regenwasser, das durch das Auffangrohr (130) läuft, zeitweise darin zu sammeln.

8. Die Einrichtungsstruktur für zurückgewonnenes Land nach Anspruch 7, ferner aufweisend Auffangtanks (150), die mit dem Regenwasserrohr (110) verbunden sind, in einem Bereich der an den Strombodenbereich (120) angrenzt und dazu gestaltet sind, das Regenwasser in den Strom (80) einzuführen, wenn das Regenwasser zugenommen hat.

9. Die Einrichtungsstruktur für zurückgewonnenes Land nach Anspruch 7, ferner aufweisend ein Abzweigrohr (145), das mit dem Auffangrohr (130) verbunden ist, nahe einer unteren Reichweite des Stroms (80) dem Wassertank (55) angrenzend, und so gestaltet ist, um das in dem Auffangrohr (130) gesammelte Regenwasser durch das Abzweigrohr (145) in dem Unterstromtank (140) zu sammeln.

10. Die Einrichtungsstruktur für zurückgewonnenes Land nach Anspruch 7 oder 9, wobei der Unterstromtank (140) folgendes aufweist:
eine erste Rohrleitung (141), die, gemäß einem Zustand der Wasserqualität, an eine Wasserreinigungsanlage angeschlossen ist;
eine zweite Rohrleitung (142), die an eine Abwasserreinigungsanlage angeschlossen ist; und
eine dritte Rohrleitung (143), die an einen Entwässerungsweg angeschlossen ist.

11. Die Einrichtungsstruktur für zurückgewonnenes Land nach Anspruch 9, wobei:
Das Abzweigrohr (145), auf einem Grund installiert, der von dem Strom (80) getrennt ist, und
Das Abzweigrohr (145) einen Entnahmebereich (160) und einen Reinigungsbereich (170) aufweist, die dazu dienen schwimmende Materialien und Ablagerungen zu entfernen, während das Regenwasser durch das Abzweigrohr (145) strömt.

12. Die Einrichtungsstruktur für zurückgewonnenes Land nach Anspruch 11, wobei der Entnahmebereich (160) folgendes aufweist:
einen Kurvenbereich (161), der dazu geformt ist, einen größeren Querschnitt als das Abzweigrohr (145) zu haben, und dazu gestaltet ist, eine Geschwindigkeit einer Strömung zu verlangsamen;
einen Führungsbereich (162), der dazu gestaltet ist, die Richtung der Strömung zu ändern; und
einen Niederschlagsbereich (164), der tiefer geformt ist als ein Boden des Abzweigrohrs (145),
wobei, während das Regenwasser den Entnahmeabschnitt (160) durchläuft, schwimmende Materialien und Ablagerungen in dem Entnahmeabschnitt (160) verbleiben.

13. Die Einrichtungsstruktur für zurückgewonnenes Land nach Anspruch 11, wobei der Reinigungsbereich (170) folgendes aufweist:
einen vergrößerten Rohrbereich (171), der durch das Vergrößern eines Teils des Abzweigrohrs (145) geformt ist,
einen Führungsbereich (172), der dazu gestaltet ist, eine Richtung der Strömung zu ändern, und
einen Reinigungsfilter (175), der innerhalb des vergrößerten Rohrbereichs (171) installiert ist.

## Revendications

1. Procédé pour préparer un terrain délimité par une digue (1), le procédé comprenant les étapes suivantes :
une étape de construction de partie de terre temporaire (S1) consistant à construire des parties de terre temporaires (20) en amoncelant de la terre ou des pierres le long du périmètre d'une zone spécifique dans un terrain (10) planifié, déterminer le terrain (10) planifié de la zone spécifique, diviser l'intérieur du terrain (10) planifié en une pluralité de zones et construire les parties de terre temporaires (20) le long du périmètre des zones spécifiques ;
une étape d'introduction de drague (S2) consistant à introduire une drague dans une partie d'excavation (50) dans le terrain (10) planifié ;
une étape d'endiguement (S3) consistant à endiguer de la terre et du sable dans la partie d'excavation (50) dans des parties d'endiguement (30) à un niveau plus haut qu'une altitude intérieure des eaux intérieures de la digue (1) et vers l'intérieur des parties de terre temporaires (20) en utilisant la drague, en amoncelant de la terre et du sable dans des parties d'endiguement (30) différentes des parties d'excavation (50) du terrain (10) planifié, de sorte qu'une dépression de terrain est formée dans la partie d'excavation (50) du terrain (10) planifié qui a été générée en creusant la terre et le sable et, en même temps, en formant des parties d'endiguement (30) plus hautes que les eaux intérieures de la digue (1) dans les parties résiduelles du terrain (10) planifié ;
une étape de décharge de drague (S4) consistant à décharger extérieurement la drague à l'extérieur du terrain (10) planifié avant de terminer les parties d'endiguement (30) ;
une étape de drainage (S5) consistant à drainer extérieurement l'eau à l'intérieur de la partie d'excavation (50) à l'extérieur du terrain (10) planifié après avoir terminé les parties d'endiguement (30) dans le terrain (10) planifié;
une étape de séchage (S6) consistant à sécher la terre et le sable à l'intérieur du terrain (10) ; et
une étape d'installation (s7) consistant à installer un barrage souterrain (40) dans une circonférence de la partie d'excavation (50) de sorte que la circonférence de la partie d'excavation (50) formée par le biais du dragage dans la partie d'excavation (50) peut être coupée après l'étape de séchage (S6) afin d'empêcher l'introduction de l'eau dans le creux de sol formé dans le terrain (10) planifié.

2. Structure d'installation de terrain d'une digue (1) obtenu avec le procédé selon la revendication 1, comprenant :
des parties de terre temporaires (20) installées en amoncelant de la terre ou des pierres le long d'une circonférence d'une zone spécifique dans le terrain (10) planifié, en déterminant le terrain (10) planifié de la zone spécifique, en divisant l'intérieur du terrain (10) planifié en une pluralité de zones et en construisant des parties de terre temporaires (20) dans les zones respectives et configurées pour empêcher l'introduction des eaux intérieures dans le terrain (10) planifié de la digue (1) ;
une partie d'excavation (50) configurée pour avoir un creux de terrain formé à l'intérieur de cette dernière en draguant la zone spécifique à l'intérieur du terrain (10) planifié ;
des parties d'endiguement (30) configurées pour former des plaines plus hautes qu'une altitude intérieure en récupérant le terrain (10) planifié différent de la partie d'excavation (50) en utilisant la terre et le sable obtenus par la partie d'excavation (50) ; et
un barrage souterrain (40) installé le long d'une circonférence de la partie d'excavation (50).

3. Structure d'installation de terrain selon la revendication 2, dans laquelle la partie d'excavation (50) comprend :
une partie d'inclinaison (53) formée par palier, et
un réservoir d'eau (55) formé dans un fond de la partie d'excavation (50).

4. Structure d'installation de terrain selon la revendication 3, comprenant en outre un cours d'eau (80) formé le long de la partie d'endiguement (30) ayant la plaine formée à l'intérieur de cette dernière et des plans d'inclinaison (51) de la partie d'excavation (50), dans laquelle on fait circuler l'eau stockée dans le réservoir d'eau (55) à l'aide d'une machine de relevage d'eau (70) installée dans la partie d'endiguement (30).

5. Structure d'installation de terrain selon la revendication 4, comprenant en outre une pluralité de parties d'installation de purification (71) installées dans le cours d'eau (80) et une vanne (72) installée au niveau d'une partie attenante aux plans d'inclinaison (51) de la partie d'excavation (50) du cours d'eau (80).

6. Structure d'installation de terrain selon la revendication 4, comprenant en outre un moyen de collecte d'eau de pluie (100) installé dans le cours d'eau (80).

7. Structure d'installation de terrain selon la revendication 6, dans laquelle le moyen de collecte d'eau de pluie (100) comprend :
un tuyau d'eaux de pluie (110, 115) configuré pour introduire l'eau de pluie sur un sol ;
un tuyau de captage (130) installé dans une partie inférieure de cours d'eau (120) et configuré pour guider l'eau de pluie, passant par les tuyaux d'eaux de pluie (110, 115), de sorte que l'eau de pluie s'écoule dans une direction identique à une direction le long de laquelle l'eau s'écoule dans le cours d'eau (80) ; et
un réservoir de courant sous-marin (140) configuré pour collecter temporairement l'eau de pluie, qui passe par le tuyau de captage (130), à l'intérieur de ce dernier.

8. Structure d'installation de terrain selon la revendication 7, comprenant en outre des réservoirs de captage (150) raccordés au tuyau d'eaux de pluie (110) au niveau d'une partie attenante à la partie inférieure de cours d'eau (120) et configurés pour introduire l'eau de pluie dans le cours d'eau (80) lorsque l'eau de pluie augmente.

9. Structure d'installation de terrain selon la revendication 7, comprenant en outre un branchement (145) raccordé au tuyau de captage (130) à proximité d'une étendue inférieure du cours d'eau (80) adjacente au réservoir d'eau (55) et configuré pour que l'eau de pluie, collectée au niveau du tuyau de captage (130), se collecte au niveau du réservoir de courant sous-marin (140) par le biais du branchement (145).

10. Structure d'installation de terrain selon la revendication 7 ou 9, dans laquelle le réservoir de courant sous-marin (140) comprend :
une première canalisation (141) raccordée à une installation de purification d'eau selon un état de la qualité de l'eau ;
une deuxième canalisation (142) raccordée à une installation de traitement des déchets des eaux d'égout ; et
une troisième canalisation (143) raccordée à une trajectoire de drainage.

11. Structure d'installation de terrain selon la revendication 9, dans laquelle :
le branchement (145) est installé sur un terrain séparément du cours d'eau (80), et
le branchement (145) comprend une partie de retrait (160) et une partie de purification (170) pour retirer les matières flottantes et les déchets alors que l'eau de pluie s'écoule dans le branchement (145).

12. Structure d'installation de terrain selon la revendication 11, dans laquelle la partie de retrait (160) comprend :
une partie de courbe (161) formée pour avoir une plus grande section transversale que le branchement (145) et configurée pour ralentir une vitesse d'un écoulement ;
une partie de guidage (162) configurée pour modifier la direction de l'écoulement ; et
une partie de précipitation (164) formée plus en profondeur qu'un fond du branchement (145),
dans laquelle alors que l'eau de pluie passe par la partie de retrait (160), il reste des matières flottantes et des déchets dans la partie de retrait (160).

13. Structure d'installation de terrain selon la revendication 11, dans laquelle la partie de purification (170) comprend :
une partie de tuyau agrandie (171) formée en agrandissant une partie du branchement (145),
une partie de guidage (172) configurée pour modifier une direction de l'écoulement, et
un filtre de purification (175) installé à l'intérieur de la partie de tuyau agrandie (171).
